# EUROPEAN PATENT APPLICATION

(11) **EP 3 666 693 A1**
(43) Date of publication of application: **17.06.2020**
(21) Application number: 19215133.0
(22) Date of filing: 11.12.2019
(51) Int. Cl.: B65G 35/06, B23Q 7/14

(54) **CONVEYOR DEVICE FOR ARTICLES**

(30) Priority: 12.12.2018 IT 201800011023
(71) Applicant: Cosberg S.p.A., 24030 Terno D'Isola (Bergamo) (IT)
(72) Inventor: VISCARDI, Gianluigi Carlo, I-24039 Sotto il Monte Giovanni XXIII, BERGAMO (IT)
(74) Representative: Crippa, Paolo Ernesto

(57) **Abstract**

Conveyor device (1) comprising a first conveyor system (10) and a second conveyor system (20), located at least partially below said first system (10); wherein each of said systems (10, 20) delimits at least one sliding track (2', 2") and comprises: i) at least one transmission element (4', 4") which develops as a ring along the sliding track (2', 2"); ii) motor means (6', 6") configured to promote the sliding of the transmission elements (4', 4") with respect to said tracks (2', 2"); article-carrying trolleys (8) releasably connected to the transmission element (4', 4") of at least one conveyor system, first (10) or second (20), between an engagement position in which an article-carrying trolley (8) is integral in translation with the transmission element (4', 4"), and a disengagement position in which the transmission element (4', 4") slides with respect to the article-carrying trolley (8); at least a first connection slide (12), which develops between first end portions (10', 20') of the conveyor systems (10, 20) so that the article-carrying trolleys (8) slide by gravity from the first (10) to the second (20) conveyor system.

## Description

The present invention relates to a conveyor device for articles.

In the sector of linear transport lines, so-called "free pallet" lines are known, in which the pieces to be transported are fixed - releasably - to supports (or pallets) released from the feeding system of the pieces along the line.

Very often the lines of this type are pallet recirculation so that, after transporting their own piece, the supports are brought back to the head of the line to transport a new piece.

As regards vertical recirculation lines, an even more specific case in which at least two lines are superimposed on each other, the transit of the supports from the upper to the lower level is carried out with lift devices: these devices pick up the supports one by one from the higher line and place them on the lower line; and vice versa, on the opposite side, they make the pallets pass from the lower line to the upper line.

However, this technical solution is not without drawbacks, since lift devices are extremely cumbersome at the end of the lines, therefore they cannot always be used for purely spatial reasons.

A solution of this type is for example disclosed by WO2017009775 (A2).

Devices are also known which act as temporary stores or lungs which move transport elements along an annular path.

Solutions of this type are for example known from DE2538273 (A1) and GB2201644 (A).

These known solutions are constructed with the aim of guiding the transport elements so that they are always reachable on their external side so as to be able to operate or manipulate the articles transported by them, picking them up or depositing them on the transport elements. To do this, one is forced to provide transport elements specifically designed to be constrained to conveyor belts or double-sided guides capable of grasping and guiding the base of the transport elements, leaving the upper part of them free and always accessible.

The need for solutions that allow the use of trolleys or pallets, even if not specifically designed for a specific conveyor device, therefore remains strongly felt.

The present invention falls within the previous context, aiming to provide a device which, with the same other factors (for example quantity of articles transported per unit of time), has an extremely reduced overall size, a circumstance which allows - by way of example - creating more space for other equipment, or doubling the quantity of items transported in the same space.

Such an object is achieved by a device according to claim 1. The dependent claims describe preferred embodiment variants.

The object of the present invention will now be described in detail, with the aid of the accompanying drawings, in which:
- figures 1 and 2 respectively show a perspective view and a side view of a device, object of the present invention, according to a possible embodiment;

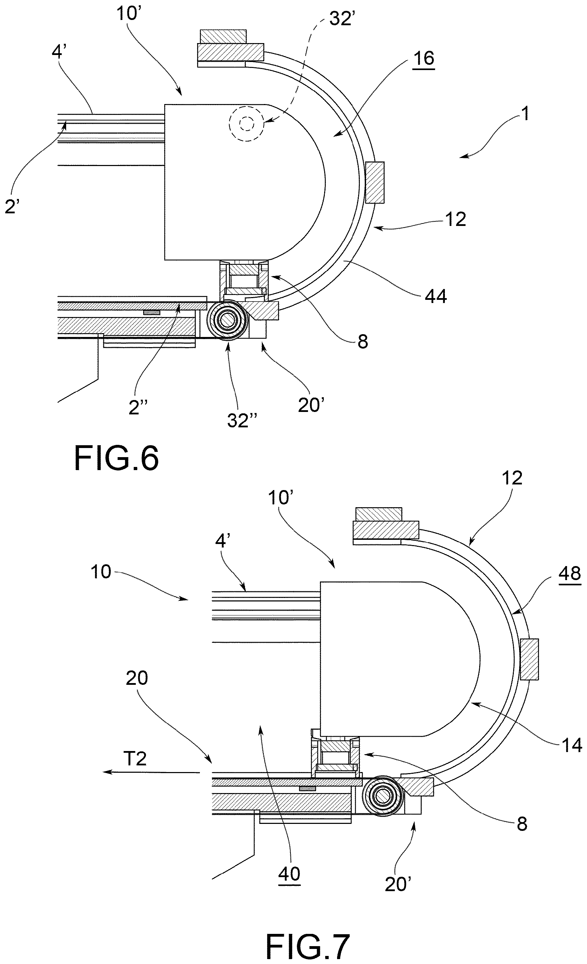

- figures 3 to 7 show enlarged side views, partially in section, of the device of figure 1 in a descending sequence of an article-carrying trolley from the first to the second conveyor system;

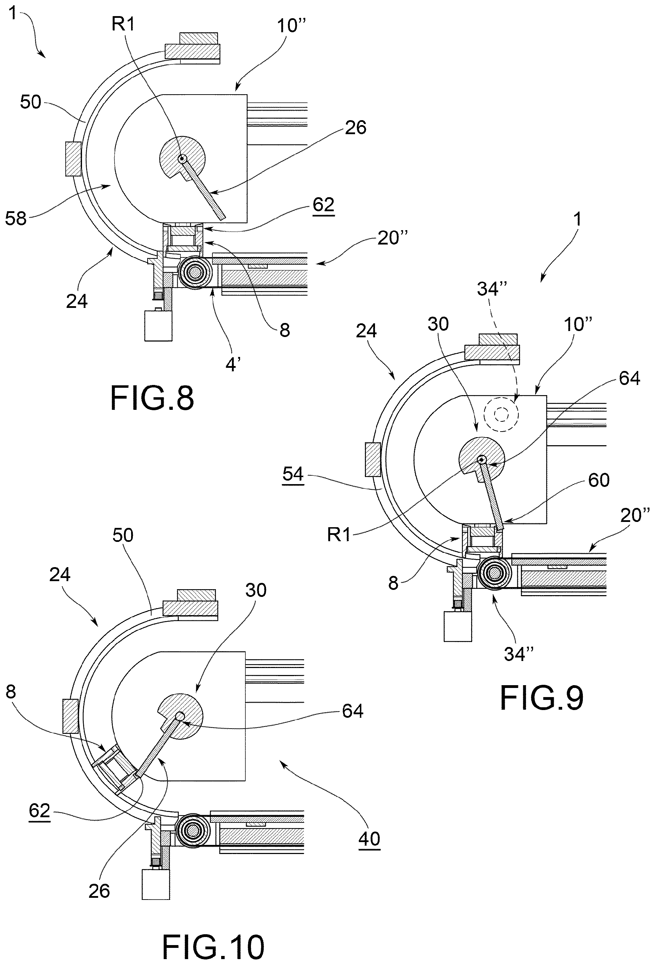

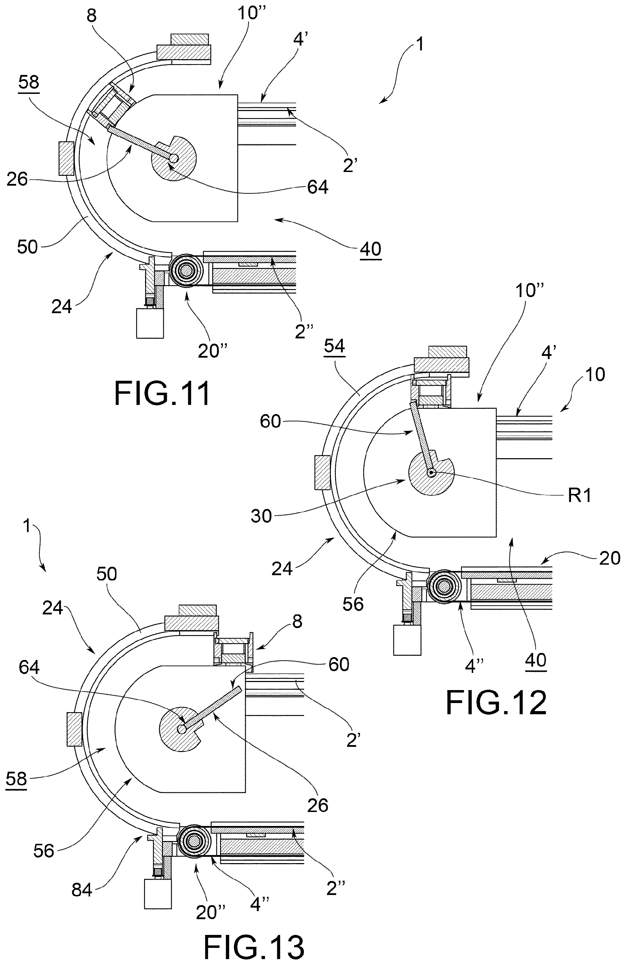

- figures 8 to 13 show enlarged side views, partially in section, of the device of figure 1 in an ascending sequence of an article-carrying trolley from the second to the first conveyor system.

With reference to the aforesaid drawings, reference numeral 1 indicates as a whole a conveyor device which comprises a first conveyor system 10 and a second conveyor system 20, a plurality of article-carrying trolleys 8 and at least one first connection slide 12, wherein the second conveyor system 20 is placed at least partially below the aforementioned first system 10.

According to an embodiment, the first conveyor system 10 is vertically superimposed on the second conveyor system 20.

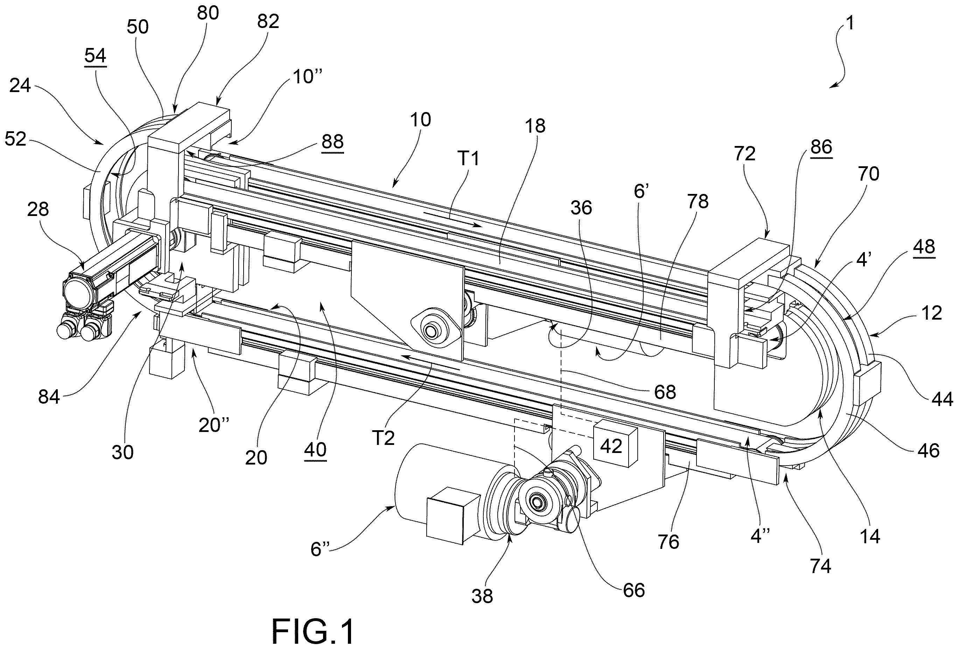

According to an embodiment, the longitudinal and/or transverse development of the conveyor systems 10, 20 is substantially corresponding (for example see figure 1).

Each of the conveyor systems 10, 20 delimits at least one sliding track 2', 2" and comprises at least one transmission element 4', 4" which develops in a ring along the sliding track 2', 2", and further comprises motor means 6', 6" configured to promote the sliding of the transmission elements 4', 4" with respect to the aforementioned sliding tracks 2', 2".

The sliding track 2', 2" therefore has a load-bearing function for the trolleys, while the transmission element instead transmits a translational motion to the latter along the track.

According to an embodiment, the transmission element 4', 4" comprises or consists of a chain, a belt or a conveyor belt.

According to an embodiment, the first conveyor system 10 and/or the second conveyor system 20 comprise a conveyor belt which implements the transmission element 4', 4".

The article-carrying trolleys 8 are releasably connected to the transmission element 4', 4" of at least one conveyor system (first 10 or second 20).

The releasable connection takes place between an engagement position in which an article-carrying trolley 8 is integral in translation with the transmission element 4', 4", and a disengagement position in which the transmission element 4', 4" slides in relation to the article-carrying trolley 8.

According to an embodiment, the transmission element 4', 4" and the article-carrying trolley 8 are coupled in shape and/or force in the engagement position.

According to an embodiment, the article-carrying trolley 8 is spaced from the transmission element 4', 4" in the disengagement position. For example, this spacing could be carried out through a trolley-lifting system (not shown) of the conveyor device 1

According to the invention, the at least one first connection slide 12 develops between first end portions 10', 20' of the conveyor systems 10, 20 so that the article-carrying trolleys 8 slide by gravity from the first 10 to the second 20 conveyor system.

According to an embodiment, the first connection slide 12 develops in an arcuate manner between the conveyor systems 10, 20.

According to an embodiment, the first connection slide 12 is generally shaped like a "C".

According to an embodiment, the first connection slide 12 is made of at least a pair of first slide guides 44, 46 side by side.

According to an embodiment, the first slide guides 44, 46 delimit a first open interspace 48.

According to an embodiment, the first connection slide 12 comprises at least a first guide member 14 accommodated at least in part in the concavity of such a slide 12.

According to an embodiment, the first guide member 14 is spaced from the first connection slide 12 to delimit (with such a slide) a sliding passage 16 for the article-carrying trolleys 8.

According to an embodiment, the sliding passage 16 delimits a complementary or adherent cross section to at least part of a profile (for example an outer profile) of the article-carrying trolleys 8.

It should be noted that in the present description, the expression "adherent" will mean a section substantially corresponding to a part of the aforementioned profile, so that the trolleys can be guided along the slide, and kept along such a sliding (for example without overturning or getting stuck).

According to an embodiment, the first conveyor system 10 is supported by the second conveyor system 20, in a suspended position, at least through the first connection slide 12 and through an opposite second connection slide 24.

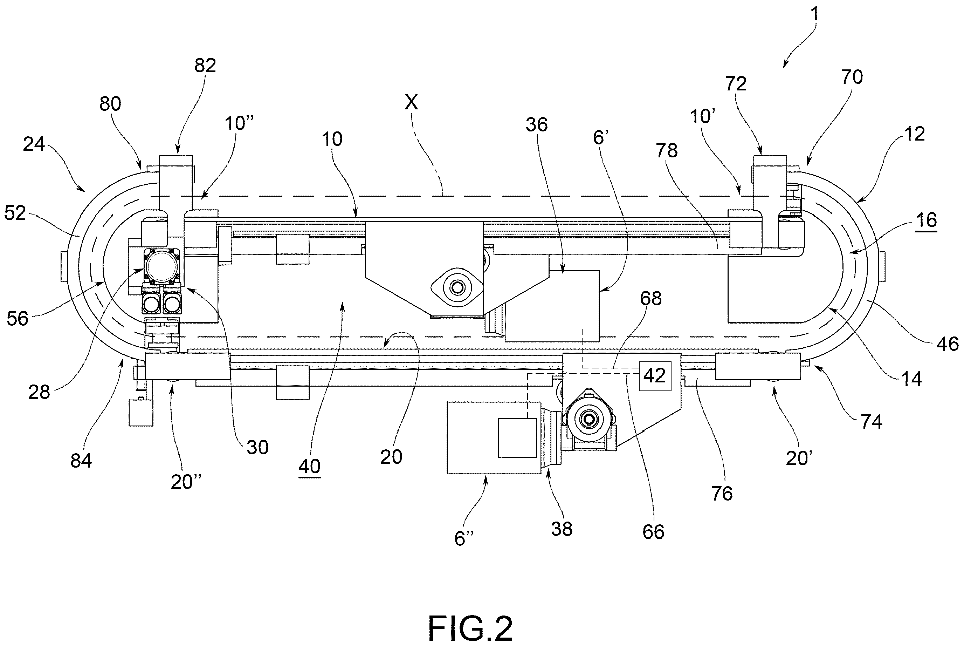

With reference to figure 1 or figure 2, a first end 70 of the first connection slide 12 is connected to the first conveyor system 10 by means of a first support structure 72 which, according to a variant, is connected to side edges 78 of such a first system 10. A second end 74 of the first connection slide 12, opposite the first end 70, is connected to the second conveyor system 20, for example to the side edges 76 of the latter 20.

According to an embodiment, a first end 80 of the second connection slide 24 is connected to the first conveyor system 10 through a second support structure 82 which, according to a variant, is connected to the side edges 78 of such a first system 10. A second end 84 of the second connection slide 24, opposite the first end 80, is connected to the second conveyor system 20, for example to the side walls 76 of the latter 20.

According to an embodiment, the first support structure 72 and/or the second support structure 82 are arranged predominantly above the first conveyor system 10.

According to an embodiment, the first support structure 72 and/or the second support structure 82 can be crossed by the article-carrying trolleys 8, since one or both delimit one or more passageways 86, 88 for these trolleys.

According to an embodiment, the first support structure 72 and/or the second support structure 82 are generally shaped as an inverted "U".

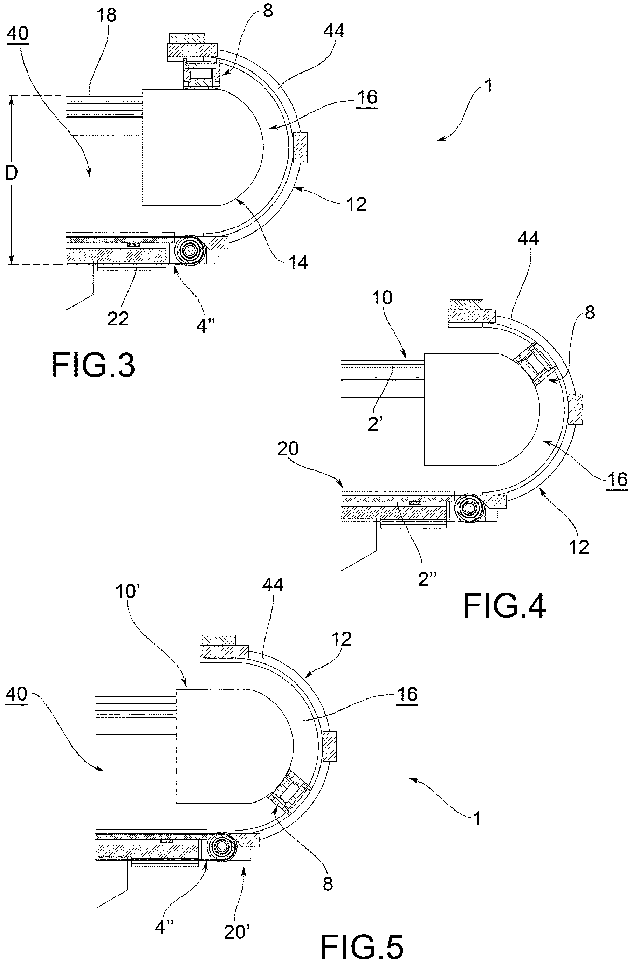

Accord ing to an embodiment, the maximum distance D (for example see figure 3) between an upper surface 18 of the first transmission element 4' and a lower surface 22 of the second transmission element 4" is equal to or less than 80 centimeters, for example in the range of 30-65 centimeters.

According to an embodiment, the device 1 comprises a second connection slide 24, which develops between second end portions 10", 20" of the conveyor systems 10, 20, opposite to the aforementioned first end portions 10', 20', so as to create an annular path X for the article-carrying trolleys 8 with the sliding tracks 2', 2" and with the first connection slide 12.

With regard to the features of the second connection slide 24 - *mutatis mutandis* - the same preferred or advantageous features discussed in relation to the first connection slide 12 apply.

In particular, according to an embodiment, the second connection slide 24 develops in an arcuate manner between the conveyor systems 10, 20.

According to an embodiment, the second connection slide 24 is generally shaped like a "C".

According to an embodiment, the second connection slide 24 is made of at least a pair of second slide guides 50, 52 side by side.

According to an embodiment, the second slide guides 50, 52 delimit a second open interspace 54.

According to an embodiment, the second connection slide 24 comprises at least a second guide member 56 accommodated at least in part in the concavity of such a slide 24.

According to an embodiment, the second guide member 56 is spaced from the second connection slide 24 to delimit (with such a slide) an ascending passage 58 for the article-carrying trolleys 8.

According to an embodiment, the ascending passage 58 delimits a complementary or adherent cross section to at least part of a profile (for example an outer profile) of the article-carrying trolleys 8.

As regards the meaning of "adherent", refer to the description above.

According to an embodiment, the second connection slide 24 is associated with the first 10 and the second 20 conveyor system so that the article-carrying trolleys 8 can pass from the second 20 to the first 10 conveyor system in contrast with the force of gravity.

In this regard, according to an embodiment, the conveyor device 1 comprises an ascent unit 30 of the article-carrying trolleys 8 configured to promote the sliding of the latter along the second connection slide 24.

Accordi ng to an embodiment, the ascent unit 30 is configured to push the article-carrying trolleys 8 along the second slide 24.

According to an embodiment, the ascent unit 30 comprises a working lever 26, which engages the article-carrying trolley 8 at an end portion 20" of the second conveyor system 20 and which can be rotated around an axis of rotation R1.

According to an embodiment, a free end 60 of the working lever 26 is configured to abut on the article-carrying trolley 8, or to engage a lever seat 62 delimited by said trolley 8.

According to an embodiment, the lever seat 62 develops partly in the thickness of the article-carrying trolley 8.

According to an embodiment, the rotation axis R1 (specifically: at which an opposite end 64 of the working lever 26 is hinged) is received in a plane orthogonal to a displacement direction T1, T2 of the article-carrying trolley 8.

According to an embodiment, one or both of the displacement directions T1, T2 are oriented along the sliding tracks 2', 2".

According to an embodiment, the displacement directions T1, T2 are mutually opposite.

According to an embodiment, the displacement directions T1, T2 are mutually parallel.

According to an embodiment, the ascent unit 30 comprises a motorized system 28, for example powered fluidically, electrically or mechanically.

According to an embodiment, the ascent unit 30 comprises a servo-motor system 28 of the mechanical, fluid, electric or electronic type.

According to an embodiment, one or both conveyor systems 10, 20 comprise transmission means 32', 32", 34', 34" arranged at least at the ends of the transmission element 4', 4".

According to an embodiment, at least one of the motor means 6', 6", which works on the transmission element 4', 4" to move it, is arranged in an intermediate position or in a central position between at least a couple of return means 32', 32", 34', 34".

According to an embodiment, at least a motor unit 36, 38 of the motor means 6', 6" is positioned predominantly or substantially completely outside an intermediate space 40 delimited between the first 10 and the second 20 conveyor system, for example so that the vertical distance between said systems is minimal, or can be reduced according to the needs.

According to an embodiment, the motor means 6', 6" comprise a first 36 and a second 38 motor units, respectively associated with the first 10 and the second 20 conveyor system.

According to an embodiment, with respect to a prevailing direction of development of the sliding track 2', 2" the aforementioned motor units 36, 38 protrude from opposite transverse directions of the track so as to balance the conveyor device 1.

According to an embodiment, the first 36 and/or the second 38 motor units are fluidly powered.

According to an embodiment, the device 1 comprises management and control means 42 (for example of the electronic type) functionally connected to the motor means 6', 6".

According to an embodiment, the motor means 6', 6" comprise a first 36 and a second 38 motor units controllable by the management and control means 42 so as to move the transmission elements 4', 4" at mutually equal or different speeds. This functional connection is schematized by the dashed lines 66, 68 in figure 1 or in figure 2.

Innovatively, the device according to the present invention allows brilliantly solving the drawbacks complained in relation to the prior art.

More precisely, this device is of small size, so it allows optimizing the spaces of a production or transport line.

Advantageously, the device object of the present invention allows achieving important energy savings by virtue of the automatic descent of the trolleys.

Advantageously, the device object of the present invention has been designed to reduce the friction of the guide with respect to the trolley.

Advantageously, in the device object of the present invention the slides also act as load-bearing elements, so that the conveyor systems are better accessible from any side.

Advantageously, the device object of the present invention prevents possible undesired blocking of the trolleys, therefore it is highly reliable.

Advantageously, the device object of the present invention allows achieving a reliable recirculation of the trolleys.

Advantageously, the device object of the present invention allows managing the transport of the trolleys in a differentiated manner for the first and second conveyor systems. In this way, by way of example, the second conveyor system can act temporarily as a lung for feeding trolleys to the first system (or vice versa).

Advantageously, the device object of the present invention has an extremely reduced height dimension. Just to give an example, it has been calculated that - in the same space where only one system of the prior art can be placed - with a device according to the invention it is possible to place a pair of them, which essentially translates into a doubling of productivity or transport for the same volume.

Advantageously, the device object of the present invention comprises a rational system for the ascent of the trolleys along the second slide.

Advantageously, the device object of the present invention has been designed in order not to damage itself in case there are slowdowns or strains during the transport of the trolleys.

Advantageously, the device object of the present invention is balanced both longitudinally and transversely.

A man skilled in the art may make several changes or replacements of elements with other functionally equivalent ones to the embodiments of the above device in order to meet specific needs.

Also such variants are included within the scope of protection as defined by the following claims.

Moreover, each variant described as belonging to a possible embodiment may be implemented independently of the other variants described.

According to an embodiment, said first connection slide 12 and second connection slide 24 are constructively identical to each other.

According to an embodiment, the first conveyor system 10 moves the article-carrying trolleys 8 so that they enter the first connection slide 12 one spaced from the other, so that they travel along said first connection slide 12 falling by gravity without the influence of adjacent article-carrying trolleys 8 or other devices.

According to an embodiment, a second connection slide 30 of the article-carrying trolleys 8 is associated with said second connection slide 24 to push in ascent a single article-carrying trolley 8 along the second slide 24.

According to an embodiment, the ascent unit 30 pushes the article-carrying trolleys 8 so as to avoid contact between adjacent article-carrying trolleys 8 during the ascent along said second connection slide 24.

According to an embodiment, the ascent unit 30 pushes the article-carrying trolleys 8 leaning on their outer surface avoiding hooks or grips or bilateral constraints at the base of the article-carrying trolley 8.

By bilateral constraint we mean a grip on surfaces that are substantially opposite each other.

According to an embodiment, each article-carrying trolley 8 comprises an inner or radially inner side suitable for cooperating with the first conveyor system 10.

According to an embodiment, the first conveyor system 10 leans against the article-carrying trolleys 8 leaning on their inner side avoiding hooks or grasps or bilateral constraints at the base of the article-carrying trolley 8.

By bilateral constraint we mean a grip on surfaces that are substantially opposite each other.

According to an embodiment, and each article-carrying trolley 8 comprises an inner or radially inner side suitable for cooperating with a first guide member 14 accommodated at least in part in the concavity of the first connection slide 12.

According to an embodiment, and each article-carrying trolley 8 comprises an inner or radially inner side suitable for cooperating with a second guide member 56 accommodated at least in part in the concavity of the second connection slide 24.

According to an embodiment, each article-carrying trolley 8 comprises an outer or radially outer side, opposite to said inner side and suitable for cooperating with first slide guides 44, 46.

According to an embodiment, each article-carrying trolley 8 comprises an outer or radially outer side, opposite to said inner side and suitable for cooperating with second slide guides 50, 52.

According to an embodiment, and each article-carrying trolley 8 comprises an outer or radially outer side suitable for cooperating with the second conveyor system 20.

According to an embodiment, each article-carrying trolley 8 is guided in its movement by the support and/or sliding of its outer surface, in particular of its inner and outer side, avoiding bilateral gripping or hooking devices made in the body of the article-carrying trolley 8 itself.

According to an embodiment, the first connection slide 12 comprises a sliding passage 16 to allow free sliding by gravity of the article-carrying trolleys 8. Said sliding passage 16 is delimited by first slide guides 44, 46 which guide the outer side of each article-carrying trolley 8.

## Claims

1. Conveyor device (1) comprising:
- a first conveyor system (10) and a second conveyor system (20), located at least partially below said first system (10); wherein each of said systems (10, 20) delimits at least one sliding track (2', 2") and comprises:
i) at least one transmission element (4', 4") which develops as a ring along the sliding track (2', 2");
ii) motor means (6', 6") configured to promote the sliding of the transmission elements (4', 4") with respect to said tracks (2', 2");
- article-carrying trolleys (8) releasably connected to the transmission element (4', 4") of at least one conveyor system, first (10) or second (20), between an engagement position in which an article-carrying trolley (8) is integral in translation with the transmission element (4', 4"), and a disengagement position in which the transmission element (4', 4") slides relative to the article-carrying trolley (8); wherein each article-carrying trolley (8) comprises an inner or radially inner side suitable for cooperating with said first conveyor system (10);
- at least one first connection slide (12) which develops between first end portions (10', 20') of the conveyor systems (10, 20) so that the article-carrying trolleys (8) slide by gravity from the first (10) to the second (20) conveyor system,
**characterized in that**
- said first connection slide (12) comprises a sliding passage (16) to allow free sliding by gravity of the article-carrying trolleys (8);
- said sliding passage (16) is delimited by first slide guides (44, 46);
- and wherein each article-carrying trolley (8) comprises an outer or radially outer side, opposite to said inner side and suitable for cooperating with said first slide guides (44, 46).

2. Device according to the preceding claim, wherein the first connection slide (12) develops in an arcuate manner between the conveyor systems (10, 20), and comprising at least a first guide member (14) accommodated at least in part in the concavity of said slide (12) and spaced from the latter to delimit a sliding passage (16) for the article-carrying trolleys (8), the sliding passage (16) delimiting a complementary or adherent cross section to at least part of a profile of article-carrying trolleys (8);
and/or wherein
each article-carrying trolley (8) is guided in its movement by the support and/or sliding of its outer surface, in particular of its inner and outer side, avoiding bilateral gripping or hooking devices made in the body of the article-carrying trolley (8) itself.

3. Device according to any one of the preceding claims, wherein the first conveyor system (10) is supported by the second conveyor system (20), in a suspended position, at least through the first connection slide (12) and through an opposite second connection slide (24).

4. Device according to any one of the preceding claims, wherein the maximum distance (D) between an upper surface (18) of the first transmission element (4') and a lower surface (22) of the second transmission element (4") is equal to or less than 80 centimeters, for example in the range of 30-65 centimeters.

5. Device according to any one of the preceding claims, wherein the first conveyor system (10) is vertically superimposed on the second conveyor system (20), and wherein the longitudinal and/or transverse development of said systems (10, 20) is substantially corresponding.

6. Device according to any one of the preceding claims, comprising a second connection slide (24), which develops between second end portions (10", 20") of the conveyor systems (10, 20), opposite to said first end portions (10', 20'), so as to create an annular path (X) for the article-carrying trolleys (8) with the sliding tracks (2', 2") and with the first connection slide (12).

7. Device according to the preceding claim, wherein the second connection slide (24) is associated with the first (10) and the second (20) conveyor system so that the article-carrying trolleys (8) can pass from the second (20) to the first (10) conveyor system in contrast to the force of gravity, and wherein the conveyor device (1) comprises an ascent unit (30) of the article-carrying trolleys (8) configured to promote their sliding along the second connection slide (24).

8. Device according to the preceding claim, wherein the ascent unit (30) comprises a working lever (26), which engages the article-carrying trolley (8) at an end portion (20") of the second conveyor system (20) and which can be rotated around an axis of rotation (R1) accommodated in a plane orthogonal to a direction of movement (T1; T2) of the article-carrying trolleys (8).

9. Device according to claim 7 or 8, wherein the ascent unit (30) comprises a servo-motor system (28) of the mechanical, fluid, electric or electronic type.

10. Device according to any one of the preceding claims, wherein one or both conveyor systems (10, 20) comprise transmission means (32', 32", 34', 34") arranged at least at the ends of the transmission element (4', 4"), and wherein at least one of the motor means (6', 6"), which works on the transmission element (4', 4") to move it, is arranged in an intermediate position or in a central position between at least one pair of transmission means (32', 32"; 34', 34").

11. Device according to any one of the preceding claims, wherein at least a motor unit (36, 38) of the motor means (6', 6") is positioned predominantly or substantially completely outside an intermediate space (40) delimited between the first (10) and the second (20) conveyor system, for example so that the vertical distance between said systems is minimal.

12. Device according to any one of the preceding claims, wherein the motor means (6', 6") comprise a first (36) and a second (38) motor units, for example fluidly powered, respectively associated with the first (10) and the second (20) conveyor system, and wherein - with respect to a prevalent direction of development of the sliding track (2', 2") - said motor units (36, 38) protrude from opposite transverse directions of said track so as to balance said conveyor device (1).

13. Device according to any one of the preceding claims, comprising management and control means (42) functionally connected to the motor means (6', 6"), and wherein the motor means (6', 6") comprise a first (36) and a second (38) motor unit controllable by the management and control means (42) so as to move the transmission elements (4', 4") at equal or different speeds.

14. Device according to any one of the preceding claims, wherein the transmission element (4', 4") and the article-carrying trolley (8) are coupled in shape and/or force in the engagement position, and wherein the article-carrying trolley (8) is spaced from the transmission element (4', 4") by means of a trolley-lifting system of the conveyor device (1) in the disengaged position.

15. Device according to any one of the preceding claims, wherein the first conveyor system (10) and/or the second conveyor system (20) comprise a conveyor belt which implements the transmission element (4', 4").
